# EUROPEAN PATENT APPLICATION

(11) **EP 4 439 375 A1**
(43) Date of publication of application: **02.10.2024**
(21) Application number: 22208303.2
(22) Date of filing: 18.11.2022
(51) Int. Cl.: G06F 40/284

(54) **IDENTIFYING AN OVERLAP BETWEEN A TRIAL STRING AND A LIST OF STRINGS**

(71) Applicant: Richter LL.M., Christoph, 80339 München (DE)
(72) Inventor: Richter LL.M., Christoph, 80339 München (DE)
(74) Representative: Hoffmann Eitle

(57) **Abstract**

A computer-implemented method for identifying an overlap between a trial string and a list of strings, the method comprising the steps of: receiving the trial string; cleansing the trial string using a first plurality of excluded expressions; splitting the cleansed trial string into at least one trial substring; calculating an encoded value of each of the at least one trial substring using the phonetic algorithm; receiving the list of strings; cleansing each string in the list of strings using a second plurality of excluded expressions, resulting in a list of cleansed strings; splitting each string in the list of cleansed strings into at least one substring, resulting in a list of substrings; calculating an encoded value of each substring in the list of substrings using a phonetic algorithm; comparing the encoded value of each of the at least one trial substring with the encoded value of each substring in the list of substrings; identifying the trial string as a potential overlap if at least one comparison of encoded values is positive; computing, for the potential overlap, a string metric value between the each of the at least one trial substring and each string in the list of substrings; and identifying, based on the one or more computed string metric values, the overlap between the trial string and the list of strings.

## Description

### Technical Field

The present invention relates to identifying an overlap between a trial string and a list of strings. Corresponding implementations relate to a method of identifying an overlap, a data processing device for identifying an overlap, a computer program for identifying an overlap and a computer-readable medium for identifying an overlap. The present invention can, for example, find an application in the context of data processing, potentially including identification whether an element or a variant thereof is found in a list.

### Technical Background

In the vast field of data processing, it is a common task to identify whether a specific element is part of a list, in other words, whether a trial string is part of a list of strings. While there are several ways to approach this problem and identify a complete agreement, in many cases an exact congruence is neither required nor possible. This may in particular be the case if the element and the list to be checked against each other have different origins and the content-related information is more important than factual agreement of the strings compared to each other. In these cases, it is possible that a check for exact congruence is negative but from a content-related perspective, the element is considered to be part of the list. This may, for example, happen when typographical errors are in the element or the list, when different spellings are used or the like.

A possible solution for such cases is to simply check manually the element against each element of the list, that is, to check the trial string against each string in the list. By doing the check manually, typographical mistakes as well as differences in spelling will be recognized by the person performing the check and thus a content-related agreement that is not an exact congruence can be found.

Clearly, this approach, while being very useful for list with a rather small number of elements, is not tedious for medium sized lists and not feasible for long or very long lists as the required time exceeds any reasonable expectation.

Therefore, there is the need to identify an overlap between a trial string and a list of strings beyond the mere question of exact congruence but also including an indication whether the content-related information is in agreement.

### Summary

The above problems are solved by the subject-matter of the independent claims. Further preferred embodiments are given by the subject-matter of the dependent claims.

According to an embodiment of the present invention, there is provided a computer-implemented method for identifying an overlap between a trial string and a list of strings, the method comprising the steps of: receiving the trial string; cleansing the trial string using a first plurality of excluded expressions; splitting the cleansed trial string into at least one trial substring; calculating an encoded value of each of the at least one trial substring using the phonetic algorithm; receiving the list of strings; cleansing each string in the list of strings using a second plurality of excluded expressions, resulting in a list of cleansed strings; splitting each string in the list of cleansed strings into at least one substring, resulting in a list of substrings; calculating an encoded value of each substring in the list of substrings using a phonetic algorithm; comparing the encoded value of each of the at least one trial substring with the encoded value of each substring in the list of substrings; identifying the trial string as a potential overlap if at least one comparison of encoded values is positive; computing, for the potential overlap, a string metric value between the each of the at least one trial substring and each string in the list of substrings; and identifying, based on the one or more computed string metric values, the overlap between the trial string and the list of strings.

According to another embodiment of the present invention, there is provided a data processing device comprising means for carrying out the steps of: receiving the trial string; cleansing the trial string using a first plurality of excluded expressions; splitting the cleansed trial string into at least one trial substring; calculating an encoded value of each of the at least one trial substring using the phonetic algorithm; receiving the list of strings; cleansing each string in the list of strings using a second plurality of excluded expressions, resulting in a list of cleansed strings; splitting each string in the list of cleansed strings into at least one substring, resulting in a list of substrings; calculating an encoded value of each substring in the list of substrings using a phonetic algorithm; comparing the encoded value of each of the at least one trial substring with the encoded value of each substring in the list of substrings; identifying the trial string as a potential overlap if at least one comparison of encoded values is positive; computing, for the potential overlap, a string metric value between the each of the at least one trial substring and each string in the list of substrings; and identifying, based on the one or more computed string metric values, the overlap between the trial string and the list of strings.

According to another embodiment of the present invention, there is provided a computer program comprising instructions which, when the program is executed by a computer, cause the computer to carry out the step of: receiving the trial string; cleansing the trial string using a first plurality of excluded expressions; splitting the cleansed trial string into at least one trial substring; calculating an encoded value of each of the at least one trial substring using the phonetic algorithm; receiving the list of strings; cleansing each string in the list of strings using a second plurality of excluded expressions, resulting in a list of cleansed strings; splitting each string in the list of cleansed strings into at least one substring, resulting in a list of substrings; calculating an encoded value of each substring in the list of substrings using a phonetic algorithm; comparing the encoded value of each of the at least one trial substring with the encoded value of each substring in the list of substrings; identifying the trial string as a potential overlap if at least one comparison of encoded values is positive; computing, for the potential overlap, a string metric value between the each of the at least one trial substring and each string in the list of substrings; and identifying, based on the one or more computed string metric values, the overlap between the trial string and the list of strings.

According to another embodiment of the present invention, there is provided a computer-readable medium instructions which, when the program is executed by a computer, cause the computer to carry out the step of: receiving the trial string; cleansing the trial string using a first plurality of excluded expressions; splitting the cleansed trial string into at least one trial substring; calculating an encoded value of each of the at least one trial substring using the phonetic algorithm; receiving the list of strings; cleansing each string in the list of strings using a second plurality of excluded expressions, resulting in a list of cleansed strings; splitting each string in the list of cleansed strings into at least one substring, resulting in a list of substrings; calculating an encoded value of each substring in the list of substrings using a phonetic algorithm; comparing the encoded value of each of the at least one trial substring with the encoded value of each substring in the list of substrings; identifying the trial string as a potential overlap if at least one comparison of encoded values is positive; computing, for the potential overlap, a string metric value between the each of the at least one trial substring and each string in the list of substrings; and identifying, based on the one or more computed string metric values, the overlap between the trial string and the list of strings.

### Brief description of the drawings

Embodiments of the present invention, which are presented for better understanding the inventive concepts, but which are not to be seen as limiting the invention, will now be described with reference to the figures in which:
- Fig. 1: shows a flowchart of a method embodiment according to the present invention;
- Fig. 2: shows details of a method embodiment according to the present invention; and
- Fig. 3: shows a schematic view of a data processing device according to the present invention.

### Detailed Description

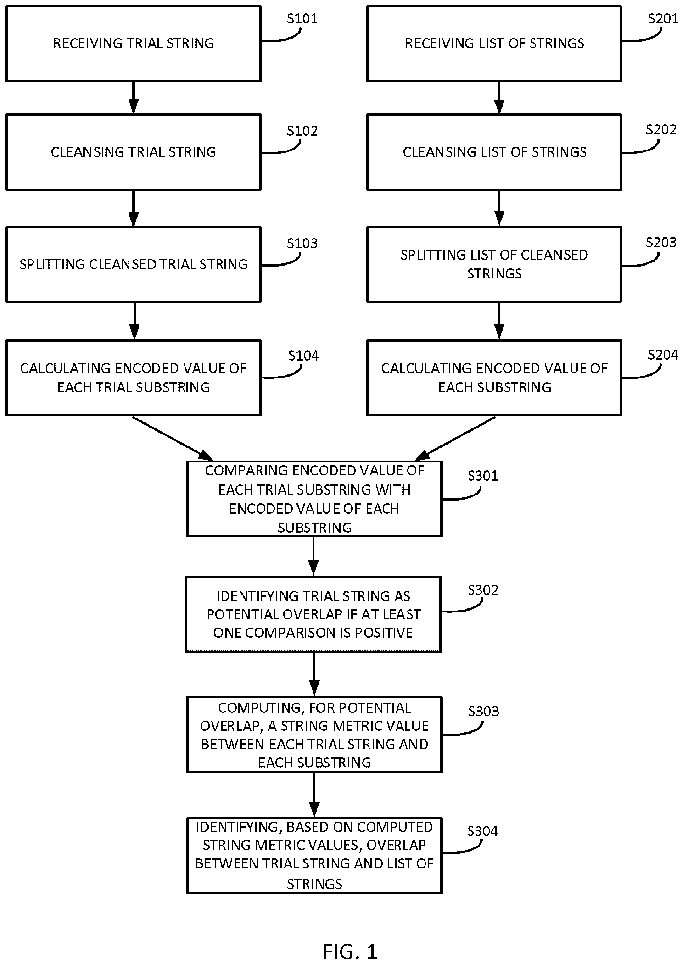

Fig. 1 shows a flowchart of a method embodiment according to the present invention. As can be seen in Fig. 1, the computer-implemented method for identifying an overlap between a trial string and a list of strings can be separated in three parts. In a first part, the trial string, that is the element to be checked against a list, is received and pre-processed. In a second part, the list of strings, that is the list against which the element is to be checked, is received and pre-processed. In a third part, identification of the overlap on the basis of the pre-processed trial string and the pre-processed list of strings takes place.

In detail, the method comprises, in the first part, receiving the trial string (S101), cleansing the trial string using a first plurality of excluded expressions (S102), splitting the cleansed trial string into at least one trial substring (S103), and calculating an encoded value of each of the at least one trial substring using the phonetic algorithm (S104).

Further, the method comprises, in the second part, receiving the list of strings (S201), cleansing each string in the list of strings using a second plurality of excluded expressions, resulting in a list of cleansed strings (S202), splitting each string in the list of cleansed strings into at least one substring, resulting in a list of substrings (S203), and calculating an encoded value of each substring in the list of substrings using a phonetic algorithm (S204).

The first part and the second part of the method are not particularly limited in their order, that is, the first part may be performed before the second part or the other way round. Equally, the first part and the second part may be performed in parallel and also performing each part step-wise is possible, for example first receiving both, the trial string and the list of strings (in any order), then cleansing both (also in any order), then splitting both (also in any order), and then calculating the encoded values (also in any order).

The third part of the method comprises comparing the encoded value of each of the at least one trial substring with the encoded value of each substring in the list of substrings (S301), identifying the trial string as a potential overlap if at least one comparison of encoded values is positive (S302), computing, for the potential overlap, a string metric value between the each of the at least one trial substring and each string in the list of substrings (S303), and identifying, based on the one or more computed string metric values, the overlap between the trial string and the list of strings (S304).

As a result, a method efficiently identifying an overlap (also an approximate overlap) between a trial string and list of strings is provided even in the case of uncertainties (due to spelling differences, typographical errors, etc., in short linguistic and contextual ambiguities) in the list of strings and/or the trial string. The resulting complexity in computation is addressed by excluding certain elements from the comparison and splitting the identifying in a first coarse-grain step and a second fine-grain step. A possible application of the present invention may be to check if an entity is part of a sanction list and, if such a check returns a positive result, to initiate further steps in accordance with the result.

Clearly, the method may be performed for a plurality of trial strings and steps that are the same for each trial string, in particular steps of the second part (steps S201 to S204) may performed only once if the method is performed for a plurality of trial strings.

As an exemplary method of cleansing the trial string using a first plurality of excluded expressions or cleansing the strings in the list of strings using a first plurality of excluded expressions, the first and the second plurality of excluded expressions may contain elements typically contained in several or many of the strings of the list of string of typically contained in the trial strings. The first and the second plurality of excluded expressions may further contain elements or be limited to elements that are understood to not be particularly helpful in identifying an overlap. Examples for such elements may be abbreviations of the type of organization, entity or the like such as "Ltd.", "Limited", "LLC", or "LLP" and equivalents or corresponding parts in other languages such as "GmbH", "AG" or "GmbH & Co. KG" in German or "SA, "SAS" or "SARL" in French.

In other words, in an embodiment according to the present invention, at least one of the first plurality of excluded expressions and the second plurality of excluded expressions may include at least one of a list of suffixes and a list of affixes.

Moreover, as can be understood from above, in a further embodiment according to the present invention, at least one of the first plurality of excluded expressions and the second plurality of excluded expressions may include terms commonly used in company names.

In addition, in an embodiment according to the present invention, the first plurality of excluded expressions and the second plurality of excluded expressions may be the same.

As an exemplary method for splitting the cleansed trial string or splitting the cleansed strings of the list of strings, a splitting in which each word is a substring is possible. In other words, the splitting may use a white space in the string as a separator. Examples of such a splitting may be that a string such as "John Doe" will be split in the substrings "John" and "Doe" while a string "John" will remain as it is, that is, the substring will be "John". It is conceivable that other character than the white space can be used as separator, in particular characters commonly used for this purpose such as "," and ";".

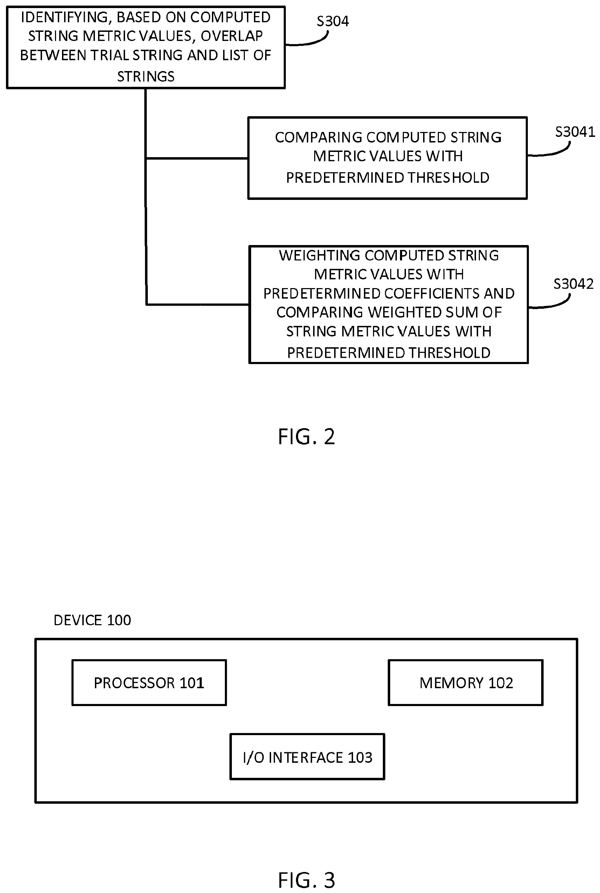

Fig. 2 shows details of a method embodiment according to the present invention. In particular, Fig. 2 shows details of the step of identifying, based on the one or more computed string metric values, the overlap between the trial string and the list of strings (S304).

Specifically, identifying the overlap may include comparing the one or more computed string metric values with a predetermined threshold (S3041). This predetermined threshold may be adapted and may serve as an element to set how close the overlap should be to be identified as such.

Further, comparing the one or more computed string metric values with the predetermined threshold (S3041) may include weighting the one or more computed string metric values with one or more predetermined coefficients and comparing the weighted sum of the one or more computed string metric values with the predetermined threshold. This may serve to give more weight to substrings that are more relevant for the determination of the overlap and less weight to substrings that less relevant for the determination of the overlap. Herein, the relevancy of substrings may be based on previous experiences as well as case specific situations.

In a further embodiment according to the present invention, a positive comparison means that the encoded value of the trial substring and the encoded value of the substring are identical. Alternatively, it is conceivable that a positive comparison is obtained if the similarity between the encoded value of the trial substring and the encoded value of the substrings exceeds a predetermined threshold.

In a further embodiment according to the present invention, the trial string may be received through user input, while in another embodiment according to the present invention, the list of string may be imported, preferably automatically imported, more preferably automatically imported and formatted. Moreover, in a further embodiment according to the present invention, the method further may comprise a step of providing the identified overlap as an output to a user, preferably for further verification. In these cases, the user experience is improved as the user can easily provide and received the input resp. output data.

In a further embodiment according to the present invention, the phonetic algorithm may be Soundex. Soundex is a phonetic algorithm for indexing names by sound. It may be based on English pronunciation. Such an algorithm may strive to identify homophones, i.e., words being pronounced the same although have a different meaning, by providing them with the same representation. Alternatively, various algorithms with similar goal can be used such as Reverse Sound, the New York State Identification and Intelligence System Phonetic Code, Daitch-Mokotoff Soundex, Metaphone or Double Metaphone or the like. Moreover, algorithms not based on English pronouncation may be used.

In a further embodiment according to the present invention, the string metric may be the Levenshtein distance. The Levenshtein distance is a string metric for measuring the difference between two sequences and used in information theory, computer science as well as linguistics. The Levenshtein distance between two strings can be understood as the minimum number of single-character edits (insertions, deletions or substitutions) required to change one string into the other. Thus, the Levenshtein distance may be a preferred choice to identify an overlap between strings. As the Levenshtein distance is an edit distance, i.e., a way of quantifying how dissimilar tow strings are to another, various alternative may be used, such as the Damerau-Levenshtein distance, the longest common subsequence distance, the Hamming distance or the Jaro distance.

Fig. 3 shows a schematic view of a data processing device according to the present invention. Specifically, Fig. 3 shows a device 100 comprising a processor 101, a memory 102 and an input/output (I/O) interface 103. The processor 101 may be configured to perform all calculation aspects involved in embodiments according to the present, the memory 102 may be configured to store all data involved in embodiments according to the present invention, and the I/O interface 103 may be configured to perform all input and output related aspects in embodiments according to the present invention.

That is, in line with Fig. 3, there is provided in an embodiment according to the present invention a data processing device (100) comprising means for carrying out the steps of: receiving the trial string (S101); cleansing the trial string using a first plurality of excluded expressions (S102); splitting the cleansed trial string into at least one trial substring (S103); calculating an encoded value of each of the at least one trial substring using the phonetic algorithm (S104); receiving the list of strings (S201); cleansing each string in the list of strings using a second plurality of excluded expressions, resulting in a list of cleansed strings (S202); splitting each string in the list of cleansed strings into at least one substring, resulting in a list of substrings (S203); calculating an encoded value of each substring in the list of substrings using a phonetic algorithm (S204); comparing the encoded value of each of the at least one trial substring with the encoded value of each substring in the list of substrings (S301); identifying the trial string as a potential overlap if at least one comparison of encoded values is positive (S302); computing, for the potential overlap, a string metric value between the each of the at least one trial substring and each string in the list of substrings (S303); and identifying, based on the one or more computed string metric values, the overlap between the trial string and the list of strings (S304).

Here, the means may comprise the processor 101, the memory 102 and the I/O interface 103.

In addition, a further embodiment according to the present invention relates to a computer program comprising instructions which, when the program is executed by a computer, cause the computer to carry out the step of: receiving the trial string (S101); cleansing the trial string using a first plurality of excluded expressions (S102); splitting the cleansed trial string into at least one trial substring (S103); calculating an encoded value of each of the at least one trial substring using the phonetic algorithm (S104); receiving the list of strings (S201); cleansing each string in the list of strings using a second plurality of excluded expressions, resulting in a list of cleansed strings (S202); splitting each string in the list of cleansed strings into at least one substring, resulting in a list of substrings (S203); calculating an encoded value of each substring in the list of substrings using a phonetic algorithm (S204); comparing the encoded value of each of the at least one trial substring with the encoded value of each substring in the list of substrings (S301); identifying the trial string as a potential overlap if at least one comparison of encoded values is positive (S302); computing, for the potential overlap, a string metric value between the each of the at least one trial substring and each string in the list of substrings (S303); and identifying, based on the one or more computed string metric values, the overlap between the trial string and the list of strings (S304).

In addition, a further embodiment according to the present invention relates to a computer-readable medium instructions which, when the program is executed by a computer, cause the computer to carry out the step of: receiving the trial string (S101); cleansing the trial string using a first plurality of excluded expressions (S102); splitting the cleansed trial string into at least one trial substring (S103); calculating an encoded value of each of the at least one trial substring using the phonetic algorithm (S104); receiving the list of strings (S201); cleansing each string in the list of strings using a second plurality of excluded expressions, resulting in a list of cleansed strings (S202); splitting each string in the list of cleansed strings into at least one substring, resulting in a list of substrings (S203); calculating an encoded value of each substring in the list of substrings using a phonetic algorithm (S204); comparing the encoded value of each of the at least one trial substring with the encoded value of each substring in the list of substrings (S301); identifying the trial string as a potential overlap if at least one comparison of encoded values is positive (S302); computing, for the potential overlap, a string metric value between the each of the at least one trial substring and each string in the list of substrings (S303); and identifying, based on the one or more computed string metric values, the overlap between the trial string and the list of strings (S304).

Although detailed embodiments have been described, these only serve to provide a better understanding of the invention defined by the independent claims and are not to be seen as limiting.

## Claims

1. A computer-implemented method for identifying an overlap between a trial string and a list of strings, the method comprising the steps of:
receiving the trial string;
cleansing the trial string using a first plurality of excluded expressions;
splitting the cleansed trial string into at least one trial substring;
calculating an encoded value of each of the at least one trial substring using the phonetic algorithm;
receiving the list of strings;
cleansing each string in the list of strings using a second plurality of excluded expressions, resulting in a list of cleansed strings;
splitting each string in the list of cleansed strings into at least one substring, resulting in a list of substrings;
calculating an encoded value of each substring in the list of substrings using a phonetic algorithm;
comparing the encoded value of each of the at least one trial substring with the encoded value of each substring in the list of substrings;
identifying the trial string as a potential overlap if at least one comparison of encoded values is positive;
computing, for the potential overlap, a string metric value between the each of the at least one trial substring and each string in the list of substrings; and
identifying, based on the one or more computed string metric values, the overlap between the trial string and the list of strings.

2. The method according to claim 1,
wherein identifying the overlap includes comparing the one or more computed string metric values with a predetermined threshold.

3. The method according to claim 2,
wherein comparing the one or more computed string metric values with the predetermined threshold includes weighting the one or more computed string metric values with one or more predetermined coefficients and comparing the weighted sum of the one or more computed string metric values with the predetermined threshold.

4. The method according to any one of claims 1 to 3,
wherein a positive comparison means that the encoded value of the trial substring and the encoded value of the substring are identical

5. The method according to any one of claims 1 to 4,
wherein the trial string is received through user input.

6. The method according to any one of claims 1 to 5,
wherein the list of string is imported, preferably automatically imported, more preferably automatically imported and formatted.

7. The method according to any one of claims 1 to 6,
further comprising a step of providing the identified overlap as an output to a user, preferably for further verification.

8. The method according to any one of claims 1 to 7,
wherein the phonetic algorithm is Soundex.

9. The method according to any one of claims 1 to 8,
wherein the string metric is the Levenshtein distance.

10. The method according to any one of claims 1 to 9,
wherein at least one of the first plurality of excluded expressions and the second plurality of excluded expressions includes at least one of a list of suffixes and a list of affixes.

11. The method according to any one of claims 1 to 10,
wherein at least one of the first plurality of excluded expressions and the second plurality of excluded expressions includes terms commonly used in company names.

12. The method according to any one of claims 1 to 11,
wherein the first plurality of excluded expressions and the second plurality of excluded expressions are the same.

13. A data processing device comprising means for carrying out the steps of:
receiving the trial string;
cleansing the trial string using a first plurality of excluded expressions;
splitting the cleansed trial string into at least one trial substring;
calculating an encoded value of each of the at least one trial substring using the phonetic algorithm;
receiving the list of strings;
cleansing each string in the list of strings using a second plurality of excluded expressions, resulting in a list of cleansed strings;
splitting each string in the list of cleansed strings into at least one substring, resulting in a list of substrings;
calculating an encoded value of each substring in the list of substrings using a phonetic algorithm;
comparing the encoded value of each of the at least one trial substring with the encoded value of each substring in the list of substrings;
identifying the trial string as a potential overlap if at least one comparison of encoded values is positive;
computing, for the potential overlap, a string metric value between the each of the at least one trial substring and each string in the list of substrings; and
identifying, based on the one or more computed string metric values, the overlap between the trial string and the list of strings.

14. A computer program comprising instructions which, when the program is executed by a computer, cause the computer to carry out the step of:
receiving the trial string;
cleansing the trial string using a first plurality of excluded expressions;
splitting the cleansed trial string into at least one trial substring;
calculating an encoded value of each of the at least one trial substring using the phonetic algorithm;
receiving the list of strings;
cleansing each string in the list of strings using a second plurality of excluded expressions, resulting in a list of cleansed strings;
splitting each string in the list of cleansed strings into at least one substring, resulting in a list of substrings;
calculating an encoded value of each substring in the list of substrings using a phonetic algorithm;
comparing the encoded value of each of the at least one trial substring with the encoded value of each substring in the list of substrings;
identifying the trial string as a potential overlap if at least one comparison of encoded values is positive;
computing, for the potential overlap, a string metric value between the each of the at least one trial substring and each string in the list of substrings; and
identifying, based on the one or more computed string metric values, the overlap between the trial string and the list of strings.

15. A computer-readable medium instructions which, when the program is executed by a computer, cause the computer to carry out the step of:
receiving the trial string;
cleansing the trial string using a first plurality of excluded expressions;
splitting the cleansed trial string into at least one trial substring;
calculating an encoded value of each of the at least one trial substring using the phonetic algorithm;
receiving the list of strings;
cleansing each string in the list of strings using a second plurality of excluded expressions, resulting in a list of cleansed strings;
splitting each string in the list of cleansed strings into at least one substring, resulting in a list of substrings;
calculating an encoded value of each substring in the list of substrings using a phonetic algorithm;
comparing the encoded value of each of the at least one trial substring with the encoded value of each substring in the list of substrings;
identifying the trial string as a potential overlap if at least one comparison of encoded values is positive;
computing, for the potential overlap, a string metric value between the each of the at least one trial substring and each string in the list of substrings; and
identifying, based on the one or more computed string metric values, the overlap between the trial string and the list of strings.
